# EUROPÄISCHE PATENTSCHRIFT

(11) **EP 4 048 612 B1**
(45) Veröffentlichungstag und Bekanntmachung des Hinweises auf die Patenterteilung: **17.05.2023**
(21) Anmeldenummer: 20790319.6
(22) Anmeldetag: 20.10.2020
(51) Int. Cl.: B65G 15/00, B65G 43/02

(54) **VERFAHREN ZUR HERSTELLUNG VON 1,6-ANHYDRO-ZUCKERN**
CONVEYOR BELT SYSTEM HAVING DATA TRANSMISSION INTEGRATED IN THE CONVEYOR BELT
PROCÉDÉ DE PRODUCTION D'ANHYDRO-1,6 SUCRES

(30) Priorität: 21.10.2019 DE 102019216124; 21.10.2019 BE 201905724
(43) Veröffentlichungstag der Anmeldung: 31.08.2022
(73) Patentinhaber: FLSmidth A/S, 2500 Valby (DK)
(72) Erfinder: ETRI, Marc, 76137 Karlsruhe (DE); PFAFF, Felix, 76297 Stutensee (DE); NIX, Bernhard, 76870 Kandel (DE); GUERRERO, Ivan, 76137 Karlsruhe (DE); SCHELLERT, Yannick, 76135 Karlsruhe (DE); HAAS, Valentin, 76137 Karlsruhe (DE); KWIATKOWSKI, Tomasz, 45149 Essen (DE)
(86) Internationale Anmeldenummer: PCT/EP2020/079425
(87) Internationale Veröffentlichungsnummer: WO 2021/078702

(56) Entgegenhaltungen:
- EP-A1- 2 630 063
- DE-A1-102005 037 117
- US-A1- 2011 137 613
- US-A1- 2012 012 443

## Beschreibung

Die Erfindung betrifft eine Förderbandanlage, wobei das Förderband wenigstens einen Datenspeicher aufweist, mit welchen Daten übertragen werden können, ohne dass eine Verkabelung vorliegt.

Förderbandanlagen dienen den Transport von Schüttgut oder Schüttgut. Hierbei gibt es verschiedene Anwendungen. Angefangen von kurzen Förderbändern, beispielsweise bei Kassen im Einzelhandel bis hin zu sehr langen Förderbandanlagen. Lange Förderbandanlage kommen beispielsweise im Tagebau oder allgemein in der Weiterverarbeitung von Schüttgut zum Einsatz. Diese Förderbandanlagen können sich über viele Kilometer erstrecken, beispielsweise von einer Abbaufront im Tagebau bis hin zur Verladestelle. Es kann daher sehr aufwendig sein, solche Anlagen informationstechnisch zu verbinden, um beispielsweise Verschleiß- oder Belastungsinformationen entlang des Förderbandes zu transportieren. Aufgrund der großen Distanzen ist eine kabellose Übertragung üblicherweise energetisch sehr aufwendig.

Aus der US 2011/137613 A1 ist ein Förderband mit Tragrollen und einer Sensoreinheit bekannt, wobei der Sensor Abnormalitäten in den Tragrollen erfassen soll.

US 2011/137613 A1 offenbart die Merkmale des Oberbegriffs des Anspruchs 1.

Aus der DE 10 2005 037 117 A1 ist ein Transponder und ein Messmittel zum Messen von Temperatur oder Druck in einem Förderband bekannt.

Aus der WO 2012/054304 A1 ist ein Förderband mit einer Methode zur Detektion von statischen elektrischen Ladungen bekannt.

Aus der US 2012/012443 A1 ist ein Förderband mit einer Vielzahl an Tragrollen und einer Detektionseinheit zur Erfassung des Zustands der Tragrollen bekannt.

Aufgabe der Erfindung ist es, eine Information entlang einer Förderbandanlage zu transportieren, ohne die Förderbandanlage mit einer kabelgebundenen oder kabellosen Infrastruktur zur elektronischen Datenübertragung auszustatten.

Gelöst wird diese Aufgabe durch eine Förderbandanlage mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Förderbandanlage weist ein Traggestell, ein Förderband und wenigstens einen Antrieb auf. Das Förderband weist wenigstens eine erste elektronische Baugruppe auf, wobei die erste elektronische Baugruppe wenigstens einen ersten Datenspeicher und eine erste Antenne zur kontaktlosen Kommunikation aufweist. Eine solche elektronische Baugruppe wird auch als Transponder bezeichnet. Besonders bevorzugt handelt es sich bei der ersten elektronischen Baugruppe um einen passiven Transponder. Die erste elektronische Baugruppe verfügt somit bevorzugt nicht über eine aktive Energieversorgung, sondern bezieht ihre Energie aus dem elektromagnetischen Feld eines Lesegerätes. Vorteil der Aufführung als passiver Transponder ist die Lebensdauer, da diese nicht beispielsweise durch eine Batterielebensdauer begrenzt ist.

Lediglich beispielhaft, aber auch bevorzugt, sind kontaktlose Kommunikationen mittels einem der Standards ISO 7816, ISO 10536, ISO 14443 oder ISO 15693 genannt.

Der Transponder arbeitet beispielsweise im HF Bereich, insbesondere im Bereich von 6,765 MHz bis 6,795 MHz, 13,553 MHz bis 13,567 MHz oder 26,957 MHz bis 27,283 MHz. In diesem Fall ist die erste Antenne bevorzugt eine Spule.

Der Transponder arbeitet beispielsweise im UHF Bereich, insbesondere im Bereich von 40,66 MHz bis 40,70 MHz, 433,05 MHz bis 434,79 MHz, 902 MHz bis 928 MHz oder 2,4 GHz bis 2,5 GHz. In diesem Fall ist die erste Antenne zum Beispiel eine Dipolantenne.

Die erste elektronische Baugruppe ist somit Bestandteil des Förderbandes und mit diesem fest verbunden. Dieses unterscheidet das vorliegende Förderband grundlegend von beispielsweise einer Warensicherung, bei welcher der Transponder in der Ware, also in dem auf der Förderbandanlage transportierten Ware, angeordnet ist.

Die Förderbandanlage weist wenigstens eine erste Auslese-Kommunikationsvorrichtung zur kontaktlosen Auslesung von Daten aus dem ersten Datenspeicher der ersten elektronischen Baugruppe auf. Hierfür ist die erste Auslese-Kommunikationsvorrichtung zum Auslesen der ersten elektronischen Baugruppe ausgebildet.

Die Förderbandanlage weist wenigstens eine erste Schreib-Kommunikationsvorrichtung auf. Hierbei kann im einfachen Falle die erste Schreib-Kommunikationsvorrichtung derart ausgebildet sein, dass diese lediglich die Energie für die erste elektronische Baugruppe zur Verfügung stellt, im einfachsten Falle elektromagnetische Strahlung im richtigen Frequenzbereich emittiert. Diese Ausführungsform ist bevorzugt, sofern die erste elektronische Baugruppe zur verständigten Erfassung der Sensordaten ausgebildet ist. Ist der Sensor elektronisch mit der ersten Schreib-Kommunikationsvorrichtung verbunden, so ist die Schreib-Kommunikationsvorrichtung kompatibel zur ersten elektronischen Baugruppe zur Datenübertragung ausgeführt.

Die Förderbandanlage weist wenigstens einen ersten Sensor auf, wobei der erste Sensor zur Erfassung erster Daten wenigstens einer Zustandsgröße der Förderbandanlage ausgebildet ist. Beispielshafte und bevorzugte Zustandsgrößen sind Zugspannungen im Förderband, Verschleißzustand von Laufrollen, Druck, insbesondere Druck durch Nutzlast, Temperatur, Beschleunigung des Förderbandes. Die ersten Daten können die realen Messdaten der Zustandsgröße sein. Alternativ oder zusätzlich können die ersten Daten auch Information sein, welche aus den realen Messdaten gewonnen wurden. Ein Beispiel für derartige gewonnene Informationen kann beispielsweise die Positionsangabe einer Laufrolle sein, welche aufgrund von Verschleiß bevorzugt ausgetauscht werden sollte. Ebenso kann es sich bei den ersten Daten um Differenzen zu Soll-Zuständen handeln, also beispielsweise wie weit die Zugspannung über oder unter dem Sollwert liegt. Die ersten Daten können hierbei auch zeitabhängig erfasst werden, beispielsweise um das Druckporfil beim Überqueren einer Mehrzahl an Rollen an Ganzes im zeitlichen Verlauf aufzuzeichnen.

Die ersten Daten werden während der Kommunikation zwischen der ersten Schreib-Kommunikationsvorrichtung und der ersten elektronischen Baugruppe vom ersten Sensor in den ersten Datenspeicher übertragen.

Auf diese Weise können einfach Daten auch entlang einer kilometerlangen Förderbandanlage transportiert werden, ohne dass eine aufwändige Verkabelung der gesamten Förderbandanlage notwendig ist. Ebenso ist eine vergleichsweise einfache Nachrüstung bestehender Förderbandanlagen möglich.

In einer weiteren Ausführungsform der Erfindung ist die erste Auslese-Kommunikationsvorrichtung am Ende der Förderbandanlage angeordnet. Das Ende der Förderbandanlage wird der Bereich angesehen in welchen das Fördergut vom Förderband wieder abgegeben wird. Üblicherweise weist das Ende der Förderbandanlage eine Umlenkrolle auf, an welcher das Förderband von der Oberseite zu Unterseite umgelenkt wird. Üblicherweise ist am Ende der Förderbandanlage eine Infrastruktur gegeben, die die Information aufnehmen, weiterleiten und/oder verarbeiten kann. Alternativ oder zusätzlich kann die erste Auslese-Kommunikationsvorrichtung am Anfang der Förderbandanlage angeordnet sein.

In einer weiteren Ausführungsform der Erfindung ist der erste Sensor Bestandteil der ersten elektronischen Baugruppe. Daher ist in dieser Ausführungsform die erste Schreib-Kommunikationsvorrichtung ausschließlich zur kontaktlosen Energieversorgung der ersten elektronischen Baugruppe ausgebildet. Besonders bevorzugt ist der erste Sensor zur Erfassung der Zugspannung im Förderband ausgebildet. Alternativ oder über zusätzliche Sensoren kann beispielsweise Druck und/oder Temperatur erfasst werden, um beispielsweise Belastungsspitzen beim Beladen oder thermische Belastungsspitzen zu identifizieren und somit eine Indikation für den Verschleiß des Förderbandes zu erhalten. Bevorzugt ist der erste Sensor mit dem integrierten Schaltkreis kontaktbehaftet verbunden. Insbesondere wird der erste Sensor mit dem integrierten Schaltkreis auf einer Chipfolie zusammengeführt und anschließend als Chipfolie in das Förderband eingebracht oder an das Förderband angebracht. Erfindungsgemäß weist die Förderbandanlage wenigstens einen zweiten Antrieb und eine zweite Auslese-Kommunikationsvorrichtung auf. Die erste Auslese-Kommunikationsvorrichtung ist mit dem ersten Antrieb verbunden und die zweite Auslese-Kommunikationsvorrichtung ist mit dem zweiten Antrieb verbunden.

Gerade bei sehr langen Förderbandanlage ist es vorteilhaft, nicht ausschließlich einen zentralen Antrieb zu haben, welcher das gesamte Förderband inklusive der Beladung des Förderbandes antreiben muss. Schwierig ist hierbei jedoch, die verschiedenen Antriebe zu synchronisieren und so zu verhindern, dass ungewollt Zugspannungen innerhalb des Förderbandes auftreten. Weist nun bevorzugt die elektronische Baugruppe einen ersten Sensor zur Erfassung der Zugspannungen Förderband auf, so kann die Zugspannung in einem theoretisch neutral belasteten Bereich erfasst werden und dann in dem darauf folgenden Bereich des nächsten Antriebes ausgelesen werden. Läuft der nächste Antrieb zu schnell oder zu langsam, so ist dieses über die erfasste Zugspannung feststellbar, insbesondere über ein Abweichen Zugspannung über oder unter einen Sollwert. Der Antrieb kann dann entsprechend steuertechnisch korrigiert werden. Daher sind bevorzugt die erste Auslese-Kommunikationsvorrichtung über eine erste Steuervorrichtung mit dem ersten Antrieb und die zweite Auslese-Kommunikationsvorrichtung über eine zweite Steuervorrichtung mit dem zweiten Antrieb verbunden.

Erfindungsgemäß weist die Förderbandanlage eine Vielzahl von Antrieben auf, wobei jeweils zwischen zwei benachbarten Antrieben jeweils wenigstens eine Schreib-Kombinationsvorrichtung angeordnet ist, wobei benachbarte zu jedem Antrieb eine Auslese-Kommunikationsvorrichtung angeordnet ist. Hierdurch ist die Erfassung der Zugspannungen jeweils zwischen zwei Antrieben möglich und so kann jeder Antrieb einzeln angesteuert werden, um eine unnötige Zugbelastung innerhalb des Förderbandes zu vermeiden.

In einer weiteren Ausführungsform der Erfindung weist die erste elektronische Baugruppe einen integrierten Schaltkreis auf, wobei der integrierte Schaltkreis eine Dicke von weniger als 50 µm, bevorzugt von weniger als 30 µm, besonders bevorzugt von weniger als 20 µm aufweist. Vorteil ist, dass ein soweit gedünnter integrierte Schaltkreis flexibel wird, wenigstens aber Biegeradien von um 1 cm beschädigungsfrei übersteht und somit auch an einer Umlenkrolle nicht beschädigt wird. Ein weiterer Vorteil ist, dass hierdurch auch die Eigenschaften eines Förderbandes nicht wesentlich verändert werden, was insbesondere für die Nachrüstbarkeit sehr vorteilhaft ist. Derartige gedünnte integrierte Schaltkreise sind beispielsweise aus der DE 196 51 566 A1 bekannt.

In einer weiteren Ausführungsform der Erfindung weist die erste elektronische Baugruppe einen integrierten Schaltkreis auf, wobei der integrierte Schaltkreis eine Antenne zur kontaktlosen Kommunikation aufweist. Derartige integrierte Schaltkreise werden auch als Coil-on-Chip bezeichnet. Die Antenne wird hierbei bereits bei der Herstellung des integrierten Schaltkreises mit in den integrierten Schaltkreis eingebaut. Vorteil ist, dass eine nachträgliche Kontaktierung des integrierten Schaltkreises entfällt. Da die Fläche der Antenne jedoch regelmäßig sehr klein ist, werden oftmals sogenannte Booster-Antennen verwendet, bei denen eine erste kleine Spule in der Größe des integrierten Schaltkreises mit einer zweiten, deutlich größeren Spule elektrisch verbunden ist. Der integrierte Schaltkreis wird dann oberhalb oder unterhalb der ersten kleinen Spule angeordnet, sodass es zu einer induktiven Kopplung kommt. Ein Lesegerät bringt Energie über die induktive Kopplung in die zweite größere Spule ein. Hierdurch ist ein effizienterer Energieeintrag vom Lesegerät im den integrierten Schaltkreis möglich.

In einer weiteren Ausführungsform der Erfindung ist die erste elektronische Baugruppe im Inneren des Förderbands angeordnet. Beispielsweise und insbesondere werden gedünnte integrierte Schaltkreise, insbesondere als Coil-on-Chip, oder Chipfolien direkt bei der Herstellung des Förderbandes in dieses integriert. Dieses kann beispielsweise durch eine Einbringung zwischen verschiedene Lagen bei einer Lamination oder die Einbringung in Vergussmaterialien erfolgen.

In einer weiteren Ausführungsform der Erfindung weist das Förderband wenigstens ein erstes Segment und ein zweites Segment auf. Das erste Segment und das zweite Segment sind hintereinander angeordnet und miteinander verbunden. Die erste elektronische Baugruppe ist im Verbindungsbereich des ersten Segments und des zweiten Segments angeordnet. Da Förderbänder regelmäßig nicht aus einem einzigen Stück gefertigt werden, insbesondere wenn die Förderbandanlage mehrere Kilometer lang ist, werden diese aus Segmenten zusammengesetzt. An den Verbindungsstellen ist daher die Integration eines integrierten Schaltkreises in vorgefertigte, standardisierte Segmente einfach möglich. Übliche Längen für Segmente liegen zwischen 100 m und 500 m.

In einer weiteren Ausführungsform der Erfindung ist die erste elektronische Baugruppe in Form einer Chipfolie auf der Unterseite des Förderbandes angeordnet. Chipfolien und der Herstellung sind beispielsweise aus der EP 2 102 798 B1 bekannt. Chipfolien bestehen typischerweise aus einem Folienträger, welcher insbesondere eine Dicke zwischen 10 µm und 100 µm bevorzugt zwischen 20 µm und 100 µm aufweist, einer Antenne, insbesondere gedruckt oder gelegt, und einem integrierten Schaltkreis, bevorzugt einem gedünnten integrierten Schaltkreis.

In einer weiteren Ausführungsform der Erfindung weist die Förderbandanlage wenigstens eine erste Laufrolle auf, wobei die erste Laufrolle durch das Förderband angetrieben wird. Die erste Laufrolle ist mit einem ersten Generator verbunden und der erste Generator ist mit der ersten Schreib-Kommunikationsvorrichtung elektrisch verbunden. Der erste Generator versorgt die erste Schreib-Kommunikationsvorrichtung mit elektrischer Energie. Diese Ausführungsform hat den Vorteil, dass keine Leitungen zur Energieversorgung entlang der Förderbandanlage verlegt werden müssen. Die notwendige Energie wird dem Förderband somit entzogen, was jedoch aufgrund der geringen Energiemenge im Vergleich zur notwendigen Energie zum Betreiben der Förderbandanlage keine Änderung der Förderbandanlage an sich erfordert.

In einer weiteren Ausführungsform der Erfindung weist die Förderbandanlage wenigstens eine erste Laufrolle auf, wobei der erste Sensor oder ein zweiter Sensor in oder an der ersten Laufrolle angeordnet ist. Der erste Sensor oder der zweite Sensor ist zur Zustandsüberwachung der ersten Laufrolle ausgebildet und der erste Sensor oder der zweite Sensor ist mit der ersten Schreib-Kommunikationsvorrichtung verbunden. Gerade bei sehr langen Förderbandanlagen kann es schwierig sein, das Versagen einzelner Laufrollen zu bemerken. Da aber beispielsweise eine blockierte Laufrolle zu erhöhten Verschleiß des Förderbandes führt, ist eine schnelle Beseitigung wünschenswert. Im einfachen Fall dieser Ausführungsform überträgt die erste Schreib-Kommunikationsvorrichtung lediglich eine Zahl an die erste elektronische Baugruppe. Dieses ist vorteilhaft, insbesondere wenn eine Vielzahl von Laufrollen mit einer Vielzahl von Schreib-Kommunikationsvorrichtungen jeweils voneinander verschiedene Zahlen übertragen und diese in der elektronischen Baugruppe addiert werden. Am Ende der Förderbandanlage wird die Summe als eine Zahl übertragen. Fällt eine Laufrolle aus, so überträgt diese Zahl nicht, sodass die am Ende übertragene Zahl um genau diesen Wert zu gering ist. Somit kann aus der Differenz eindeutig auf die austauschen Laufrolle geschlossen werden.

In einer weiteren Ausführungsform der Erfindung ist erste Sensor oder der zweite Sensor über eine erste Sensorauswerteeinheit mit der ersten Schreib-Kommunikationsvorrichtung verbunden, wobei die Sensorauswerteeinheit dazu ausgebildet ist keine Daten in den ersten Datenspeicher zu übertragen, solange die erste Laufrolle voll funktionsfähig ist, wobei die Sensorauswerteeinheit dazu ausgebildet ist, eine Information in den ersten Datenspeicher zu betragen, sobald der Zustand der ersten Laufrolle nicht im Regelzustand spricht. Hierdurch wird das keine Datenfenster, welches die kontaktlose Kommunikation zur Verfügung stellt, ausschließlich für wesentliche Informationen genutzt.

In einer weiteren Ausführungsform der Erfindung weist das Förderband wenigstens eine zweite elektronische Baugruppe auf. Besonders bevorzugt weist das Förderband eine Vielzahl elektronischer Baugruppen auf. Besonders bevorzugt sind elektronischen Baugruppen baugleich. Beispielsweise und bevorzugt beträgt der Abstand zwischen zwei elektronischen Baugruppen 10 m bis 500 m.

In einem weiteren Aspekt betrifft die Erfindung ein Verfahren zum Betreiben einer erfindungsgemäßen Förderbandanlage. Es wird eine Förderbandanlage ausgewählt, welche wenigstens einen zweiten Antrieb und eine zweite Auslese-Kommunikationsvorrichtung aufweist. Die erste Auslese-Kommunikationsvorrichtung ist mit dem ersten Antrieb verbunden und die zweite Auslese-Kommunikationsvorrichtung ist mit dem zweiten Antrieb verbunden. Der erste Sensor erfasst die Zugspannung im Förderband. Das Verfahren weist die folgenden Schritte auf:
a) Messen der Zugspannung des Förderbandes mittels des ersten Sensors,
b) Speichern erster Daten auf dem ersten Datenträger, wobei die ersten Daten zur gemessenen Zugspannungen des Förderbandes korreliert sind,
c) Weitertransport des Förderbandes,
d) Auslesen der ersten Daten mittels der ersten Auslese-Kommunikationsvorrichtung,
e) Auswerten der Zugspannungen des Förderbandes,
f) Anpassen der Ansteuerung des ersten Antriebes.

Das Messen der Zugspannung a) kann beispielsweise indirekt erfolgen. Beispielsweise kann der erste Sensor eine Kapazität sein, welche durch die Zugspannung verformt wird. Somit wird anstelle einer konkreten Zugspannung die Kapazitätsänderung der Kapazität gemessen was eine der Zugspannung korrelierte Größe darstellt. Diese korrelierte Größe wird beispielsweise dann in Schritt b) gespeichert.

Wird beispielsweise in Schritt e) eine erhöhte Zugspannung festgestellt, kann dieses darauf zurückzuführen sein, dass der darauffolgende Antrieb zu stark an dem Förderband sieht also zu schnell dreht. Daher kann dann in Schritt f) beispielsweise die Antriebsleistung dieses Antriebs reduziert werden.

Anzumerken ist, dass im normalen Betrieb das Förderband kontinuierlich läuft und somit Weitertransport in Schritt c) durch diesen normalen Betrieb erfolgt.

Erfindungsgemäß wird eine Förderbandanlage mit einer Vielzahl an Antrieben ausgewählt, wobei jeweils zwischen zwei Antrieben die Zugspannungen des Förderbandes gemessen wird. Die Zugspannung oder eine der zu können korreliert Information wird im Bereich des Antriebes, welcher auf den Ort der Erfassung der Zugspannung folgt, aus dem ersten Datenspeicher ausgelesen, wobei die Ansteuerung des Antriebes entsprechend der Zugspannungen angepasst wird.

Da die Zugspannung nur schwer von außen gemessen werden kann, ist die Messung der Zugspannung im Inneren des Förderbandes eine sehr wichtige Information, um eine Förderbandanlage mit einer Vielzahl von Antrieben zu betreiben.

Nachfolgend ist die erfindungsgemäße Förderbandanlage anhand eines in den Zeichnungen dargestellten Ausführungsbeispiels näher erläutert.
- Fig. 1: erste Förderbandanlage
- Fig. 2: zweite Förderbandanlage
- Fig. 3: Chipfolie
- Fig. 4: dritte Förderbandanlage

Gleiche Teile sind im Folgenden zur Vereinfachung begleichen Bezugszeichen versehen.

Die Zeichnungen sind rein schematisch und nicht größengerecht. Zur leichteren Erkennbarkeit das Traggestell nicht mit dargestellt.

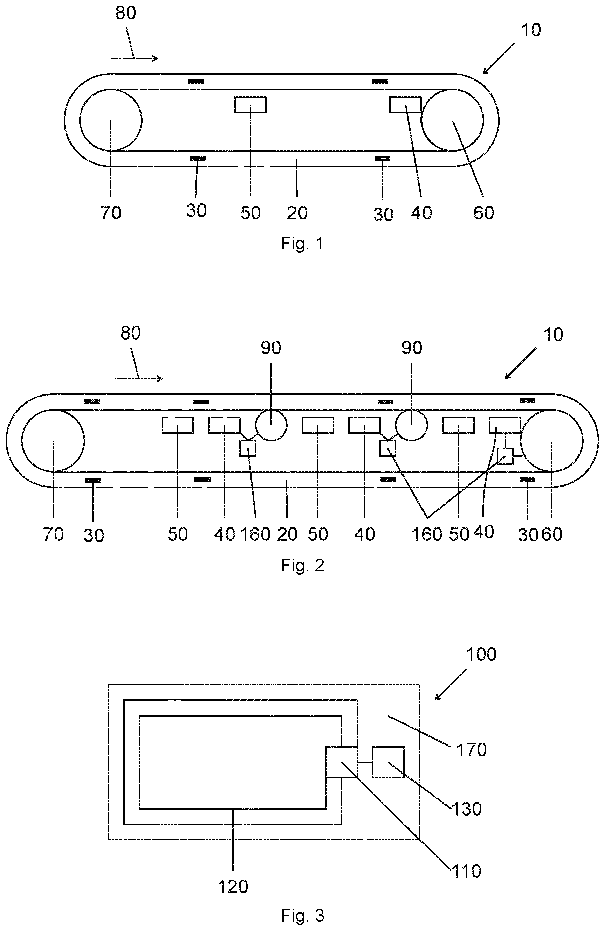

In Fig. 1 ist eine erste Förderbandanlage 10 gezeigt. Die Förderbandanlage 10 weist ein Förderband 20 auf, welches in Förderrichtung 80, also Uhrzeigersinn, transportiert wird. Hierzu weist die Förderbandanlage 10 eine Umlenkrolle mit Antrieb 60 und eine Umlenkrolle 70 auf. Die Förderbandanlage 10 kann eine Länge von 10 km oder mehr aufweisen. Daher weist die Förderbandanlage 10 üblicherweise eine große Anzahl an Laufrollen 150 auf, welche in Fig. 1 zur Vereinfachung nicht dargestellt sind.

In das Innere des Förderbands 20 sind wie gezeigt vier Transponder 30 eingebracht. Die Anzahl der Transponder kann jedoch deutlich größer sein. Transponder 30 werden beim Passieren der Schreib-Kommunikationsvorrichtung 50 mit Energie versorgt. In diesem Beispiel weist der Transponder 30 einen Sensor 130 auf, sodass der Transponder 30, sofern er durch die Schreib-Kommunikationsvorrichtung 50 mit Energie versorgt wird, Zugspannung im Förderband 20 erfassen und dem Datenspeicher des integrierten Schaltkreises 110 speichern kann. Passiert der Transponder 30 die Auslese-Kommunikationsvorrichtung 40, so wird die erfasste Zugspannung aus dem Datenspeicher ausgelesen und übertragen.

Fig. 2 zeigt eine zweite Förderbandanlage 10, welche sich von der in Fig. 1 gezeigten ersten Förderbandanlage 10 dadurch unterscheidet, dass diese zwei angetriebene Rollen 90 aufweist. Zusammen mit der Umlenkrolle mit Antrieb 60 weist diese Förderbandanlage 10 somit drei Antriebe auf. Laufen diese drei Antriebe nicht synchron, so kann das zu einer Zugspannung im Förderband 20 kommen. Mehr auftretende Zugspannung zu erfassen, weist die Förderbandanlage 10 drei Schreib-Kommunikationsvorrichtungen 50 auf, welche zwischen den Antrieben angeordnet sind. Auch in diesem Fall ist der Transponder 30 dazu ausgebildet mit einem integrierten Sensor 130 die Zugspannung des Förderbandes 20 zu erfassen. Die Zugspannung wird jeweils kurz vor dem nächsten Antrieb mittels einer Auslese-Kommunikationsvorrichtung 40 ausgelesen und die entsprechenden Daten an eine Steuervorrichtung 160 übergeben, welche den Antrieb der Umlenkrolle mit Antrieb 60 beziehungsweise der angetriebenen Rollen 90 steuert. Über den Abstand der Transponder 30 und die Geschwindigkeit des Förderbandes 20 in Förderrichtung 80 ist die Frequenz der Überprüfung einstellbar. Weisen beispielsweise die Transponder 30 einen Abstand von 100 m auf und ist die Geschwindigkeit des Förderbandes 20 10 m/s, so ergibt sich eine Erfassung und Auslesung der Zugspannung des Förderbandes 20 alle 10 Sekunden.

Selnstverständlich sind die Ausführungsformen nach Fig. 1 und Fig. 2 mit jeweils nur einem einzigem Transponder 30 hierdurch sinkt naturgemäß die Anzahl der Erfassungen. Dieses System kann bevorzugt sein, wenn beispielsweise das System nur beispielsweise einmal am Tag und nicht kontinuierlich ausgelesen werden soll. Jedoch kann es im Sinne der Ausfallsicherheit sinnvoll sein, eine kleine Anzahl an Transpondern 30 zu verwenden.

In Fig. 3 ist eine Chipfolie 100 gezeigt. Eine integrierte Schaltkreis 110, insbesondere mit einer Dicke von 20 µm bis 30 µm, ist mit einer Antenne 120 verbunden sowie mit einem Sensor 130. Die Elektronik befindet sich auf einem Substrat 170, wobei das Substrat 170 beispielsweise eine Dicke von 50 µm aufweist. In Chipfolie 100 kann in erster Näherung beispielsweise die Größe einer Scheckkarte aufweisen.

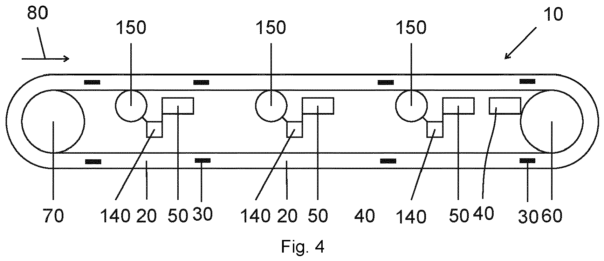

Fig. 4 zeigt eine dritte Förderbandanlage 10. Diese zeichnet sich durch drei Laufrollen 150 aus. Die Laufrolle 150 beim jeweils einen Generator 140 eine, welcher jeweils eine Schreib-Kommunikationsvorrichtung 50 mit Energie versorgt. Der Generator 140 kann hier auch als Sensor dienen. Sollte eine Laufrolle 150 nicht mehr rotieren, so wird auf der Generator 140 nicht mehr angetrieben, wodurch der Generator 140 keine Energie für die Schreib-Kommunikationsvorrichtung 50 bereitstellt. Somit kann die Schreib-Kommunikationsvorrichtung 50 keine Information an einen Transponder 30 übertragen, wodurch an der Auslese-Kommunikationsvorrichtung 40 entnehmbar ist, welche Laufrolle 150 blockiert ist.

### Bezugszeichen

- 10: Förderbandanlage
- 20: Förderband
- 30: Transponder
- 40: Auslese-Kommunikationsvorrichtung
- 50: Schreib-Kommunikationsvorrichtung
- 60: Umlenkrolle mit Antrieb
- 70: Umlenkrolle
- 80: Förderrichtung
- 90: angetriebene Rolle
- 100: Chipfolie
- 110: integrierte Schaltkreis
- 120: Antenne
- 130: Sensor
- 140: Generator
- 150: Laufrolle
- 160: Steuervorrichtung
- 170: Substrat

## Patentansprüche

1. Förderbandanlage (10), wobei die Förderbandanlage (10) ein Traggestell, ein Förderband (20) und wenigstens einen Antrieb aufweist, wobei das Förderband (20) wenigstens eine erste elektronische Baugruppe aufweist, wobei die erste elektronische Baugruppe wenigstens einen ersten Datenspeicher und eine erste Antenne (120) zur kontaktlosen Kommunikation aufweist, wobei die Förderbandanlage (10) wenigstens eine erste Auslese-Kommunikationsvorrichtung (40) zur kontaktlosen Auslesung von Daten aus dem ersten Datenspeicher der ersten elektronischen Baugruppe aufweist, wobei die Förderbandanlage (10) wenigstens eine erste Schreib-Kommunikationsvorrichtung (50) aufweist, wobei die Förderbandanlage (10) wenigstens einen ersten Sensor (130) aufweist, wobei der erste Sensor (130) zur Erfassung erster Daten wenigstens einer Zustandsgröße der Förderbandanlage (10) ausgebildet ist, wobei die ersten Daten während der Kommunikation zwischen der ersten Schreib-Kommunikationsvorrichtung (50) und der ersten elektronischen Baugruppe vom ersten Sensor (130) in den ersten Datenspeicher übertragen werden, wobei die Förderbandanlage (10) wenigstens eine zweite Auslese-Kommunikationsvorrichtung (40) aufweist, **dadurch gekennzeichnet, dass** die Förderbandanlage (10) wenigstens einen zweiten Antrieb aufweist, wobei die erste Auslese-Kommunikationsvorrichtung (40) mit dem ersten Antrieb verbunden ist, wobei die zweite Auslese-Kommunikationsvorrichtung (40) mit dem zweiten Antrieb verbunden ist, wobei die Förderbandanlage (10) eine Vielzahl von Antrieben aufweist, wobei jeweils zwischen zwei benachbarten Antrieben jeweils wenigstens eine Schreib-Kombinationsvorrichtung angeordnet ist, wobei benachbarte zu jedem Antrieb eine Auslese-Kommunikationsvorrichtung (40) angeordnet ist.

2. Förderbandanlage (10) nach Anspruch 1, **dadurch gekennzeichnet, dass** der erste Sensor (130) Bestandteil der ersten elektronischen Baugruppe ist und die erste Schreib-Kommunikationsvorrichtung (50) zur kontaktlosen Energieversorgung der ersten elektronischen Baugruppe ausgebildet ist.

3. Förderbandanlage (10) nach einem der vorstehenden Ansprüche, **dadurch gekennzeichnet, dass** der erste Sensor (130) zur Erfassung der Zugspannung im Förderband (20) ausgebildet ist.

4. Förderbandanlage (10) nach einem der vorstehenden Ansprüche, **dadurch gekennzeichnet, dass** die erste Auslese-Kommunikationsvorrichtung (40) über eine erste Steuervorrichtung (160) mit dem ersten Antrieb verbunden ist, wobei die zweite Auslese-Kommunikationsvorrichtung (40) über eine zweite Steuervorrichtung (160) mit dem zweiten Antrieb verbunden ist.

5. Förderbandanlage (10) nach einem der vorstehenden Ansprüche, **dadurch gekennzeichnet, dass** die erste elektronische Baugruppe einen integrierten Schaltkreis (110) aufweist, wobei der integrierte Schaltkreis (110) eine Dicke von weniger als 50 µm, bevorzugt von weniger als 30 µm, besonders bevorzugt von weniger als 20 µm aufweist.

6. Förderbandanlage (10) nach einem der vorstehenden Ansprüche, **dadurch gekennzeichnet, dass** die erste elektronische Baugruppe einen integrierten Schaltkreis (110) aufweist, wobei der integrierte Schaltkreis (110) eine Antenne (120) zur kontaktlosen Kommunikation aufweist.

7. Förderbandanlage (10) nach einem der vorstehenden Ansprüche, **dadurch gekennzeichnet, dass** die erste elektronische Baugruppe im Inneren des Förderbands (20) angeordnet ist.

8. Förderbandanlage (10) nach einem der vorstehenden Ansprüche, **dadurch gekennzeichnet, dass** das Förderband (20) wenigstens ein erstes Segment und ein zweites Segment aufweist, wobei das erste Segment und das zweite Segment hintereinander angeordnet sind, wobei die erste elektronische Baugruppe im Verbindungsbereich des ersten Segments und des zweiten Segments angeordnet ist.

9. Förderbandanlage (10) nach einem der vorstehenden Ansprüche, **dadurch gekennzeichnet, dass** die erste elektronische Baugruppe in Form einer Chipfolie (100) auf der Unterseite des Förderbandes (20) angeordnet ist.

10. Förderbandanlage (10) nach einem der vorstehenden Ansprüche, **dadurch gekennzeichnet, dass** die Förderbandanlage (10) wenigstens eine erste Laufrolle (150) aufweist, wobei die erste Laufrolle (150) durch das Förderband (20) angetrieben wird, wobei die erste Laufrolle (150) mit einem ersten Generator (140) verbunden ist, wobei der erste Generator (140) mit der ersten Schreib-Kommunikationsvorrichtung (50) elektrisch verbunden ist, wobei der erste Generator (140) die erste Schreib-Kommunikationsvorrichtung (50) mit elektrischer Energie versorgt.

11. Förderbandanlage (10) nach einem der vorstehenden Ansprüche, **dadurch gekennzeichnet, dass** die Förderbandanlage (10) wenigstens eine erste Laufrolle (150) aufweist, wobei der erste Sensor (130) oder ein zweiter Sensor (130) in oder an der ersten Laufrolle (150) angeordnet ist, wobei der erste Sensor (130) oder der zweite Sensor (130) zur Zustandsüberwachung der ersten Laufrolle (150) ausgebildet ist, wobei der erste Sensor (130) oder der zweite Sensor (130) mit der ersten Schreib-Kommunikationsvorrichtung (50) verbunden ist.

12. Förderbandanlage (10) nach Anspruch 11, **dadurch gekennzeichnet, dass** erste Sensor (130) oder der zweite Sensor (130) über eine erste Sensorauswerteeinheit mit der ersten Schreib-Kommunikationsvorrichtung (50) verbunden ist, wobei die Sensorauswerteeinheit dazu ausgebildet ist keine Daten in den ersten Datenspeicher zu übertragen, solange die erste Laufrolle (150) voll funktionsfähig ist, wobei die Sensorauswerteeinheit dazu ausgebildet ist, eine Information in den ersten Datenspeicher zu betragen, sobald der Zustand der ersten Laufrolle (150) nicht im Regelzustand spricht.

13. Förderbandanlage (10) nach einem der vorstehenden Ansprüche, **dadurch gekennzeichnet, dass** das Förderband (20) wenigstens eine zweite elektronische Baugruppe aufweist.

14. Verfahren zum Betreiben einer Förderbandanlage (10) nach einem der vorherstehenden Ansprüche, wobei eine Förderbandanlage (10) ausgewählt wird, welche wenigstens einen zweiten Antrieb und eine zweite Auslese-Kommunikationsvorrichtung (40) aufweist, wobei die erste Auslese-Kommunikationsvorrichtung (40) mit dem ersten Antrieb verbunden ist, wobei die zweite Auslese-Kommunikationsvorrichtung (40) mit dem zweiten Antrieb verbunden ist, wobei der erste Sensor (130) die Zugspannung im Förderband (20) erfasst, wobei das Verfahren die folgenden Schritte aufweist:
a) Messen der Zugspannung des Förderbandes (20) mittels des ersten Sensors (130),
b) Speichern erster Daten auf dem ersten Datenträger, wobei die ersten Daten zur gemessenen Zugspannungen des Förderbandes (20) korreliert sind,
c) Weitertransport des Förderbandes (20),
d) Auslesen der ersten Daten mittels der ersten Auslese-Kommunikationsvorrichtung (40),
e) Auswerten der Zugspannungen des Förderbandes (20),
f) Anpassen der Ansteuerung des ersten Antriebes,
**dadurch gekennzeichnet, dass** eine Förderbandanlage (10) mit einer Vielzahl an Antrieben ausgewählt wird, wobei jeweils zwischen zwei Antrieben die Zugspannungen des Förderbandes (20) gemessen wird, wobei die Zugspannung oder eine der zu können korreliert Information im Bereich des Antriebes, welcher auf den Ort der Erfassung der Zugspannung folgt, aus dem ersten Datenspeicher ausgelesen wird, wobei die Ansteuerung des Antriebes entsprechend der Zugspannungen angepasst wird.

## Claims

1. Conveyor belt system (10), wherein the conveyor belt system (10) has a support frame, a conveyor belt (20) and at least one drive, wherein the conveyor belt (20) has at least one first electronic assembly, wherein the first electronic assembly has at least one first data memory and a first antenna (120) for contactless communication, wherein the conveyor belt system (10) has at least one first read-out communication apparatus (40) for contactless read-out of data from the first data memory of the first electronic assembly, wherein the conveyor belt system (10) has at least one first writing communication apparatus (50), wherein the conveyor belt system (10) has at least one first sensor (130), wherein the first sensor (130) is designed to detect the first data of at least one state variable of the conveyor belt system (10), wherein the first data is transferred from the first sensor (130) to the first data memory during communication between the first writing communication apparatus (50) and the first electronic assembly, wherein the conveyor belt system (10) has at least one second read-out communication apparatus (40), **characterised in that** the conveyor belt system (10) has at least one second drive, wherein the first read-out communication apparatus (40) is connected to the first drive, wherein the second read-out communication apparatus (40) is connected to the second drive, wherein the conveyor belt system (10) has a plurality of drives, wherein, in each case, at least one writing communication apparatus is arranged between two adjacent drives, wherein one read-out communication apparatus (40) is arranged adjacent to each drive.

2. Conveyor belt system (10) according to claim 1, **characterised in that** the first sensor (130) is a component of the first electronic assembly and the first writing communication apparatus (50) is designed as a contactless power supply for the first electronic assembly.

3. Conveyor belt system (10) according to any of the preceding claims, **characterised in that** the first sensor (130) is designed to detect the tensile stress in the conveyor belt (20).

4. Conveyor belt system (10) according to any of the preceding claims, **characterised in that** the first read-out communication apparatus (40) is connected to the first drive via a first control device (160), wherein the second read-out communication apparatus (40) is connected to the second drive via a second control device (160).

5. Conveyor belt system (10) according to any of the preceding claims, **characterised in that** the first electronic assembly has an integrated circuit (110), wherein the integrated circuit (110) has a thickness of less than 50 pm, preferably of less than 30 pm, most preferably of less than 20 pm.

6. Conveyor belt system (10) according to any of the preceding claims, **characterised in that** the first electronic assembly has an integrated circuit (110), wherein the integrated circuit (110) has an antenna (120) for contactless communication.

7. Conveyor belt system (10) according to any of the preceding claims, **characterised in that** the first electronic assembly is arranged inside the conveyor belt (20).

8. Conveyor belt system (10) according to any of the preceding claims, **characterised in that** the conveyor belt (20) has at least one first segment and one second segment, wherein the first segment and the second segment are arranged one behind the other, wherein the first electronic assembly is arranged in the connecting region of the first segment and the second segment.

9. Conveyor belt system (10) according to any of the preceding claims, **characterised in that** the first electronic assembly is arranged on the underside of the conveyor belt (20) in the form of a chip film (100).

10. Conveyor belt system (10) according to any of the preceding claims, **characterised in that** the conveyor belt system (10) has at least one first roller (150), wherein the first roller (150) is driven by the conveyor belt (20), wherein the first roller (150) is connected to a first generator (140), wherein the first generator (140) is electrically connected to the first writing communication apparatus (50), wherein the first generator (140) supplies the first communication apparatus (50) with electrical power.

11. Conveyor belt system (10) according to any of the preceding claims, **characterised in that** the conveyor belt system (10) has at least one first roller (150), wherein the first sensor (130) or a second sensor (130) is arranged in or on the first roller (150), wherein the first sensor (130) or the second sensor (130) is designed to monitor the status of the first roller (150), wherein the first sensor (130) or the second sensor (130) is connected to the first writing communication apparatus (50).

12. Conveyor belt system (10) according to claim 11, **characterised in that** the first sensor (130) or the second sensor (130) is connected to the first writing communication apparatus (50) via a first sensor evaluation unit, wherein the sensor evaluation unit is designed not to transfer data to the first data memory as long as the first roller (150) is fully functional, wherein the sensor evaluation unit is designed to amount to information in first data memory, as soon as the status of the first roller (150) does not respond in the control state.

13. Conveyor belt system (10) according to any of the preceding claims, **characterised in that** the conveyor belt (20) has at least one second electronic assembly.

14. Method for operating a conveyor belt system (10) according to any of the preceding claims, wherein a conveyor belt system (10) is selected, which has at least one second drive and one second read-out communication apparatus (40), wherein the first read-out communication apparatus (40) is connected to the first drive, wherein the second read-out communication apparatus (40) is connected to the second drive, wherein the first sensor (130) detects the tensile stress in the conveyor belt (20), wherein the method comprises the following steps:
a) Measuring the tensile stress of the conveyor belt (20) by means of the first sensor(130),
b) Storing the first data on the first data medium, wherein the first data correlates to the measured tensile stresses of the conveyor belt (20),
c) Further movement of the conveyor belt (20),
d) Reading out the first data by means of the first read-out communication apparatus (40),
e) Evaluating the tensile stresses of the conveyor belt (20),
f) Adjusting the actuation of the first drive,
**characterised in that** a conveyor belt system (10) with a plurality of drives is selected, wherein, in each case, the tensile stresses of the conveyor belt (20) are measured between two drives, wherein the tensile stress or a piece of information that may be correlated thereto in the region of the drive, which follows the location where the tensile stress is detected, is read out of the first data memory, wherein the actuation of the drive is adjusted in accordance with the tensile stresses.

## Revendications

1. Système à bande transporteuse (10), dans lequel le système à bande transporteuse (10) présente un cadre porteur, une bande transporteuse (20) et au moins un mécanisme d'entraînement, dans lequel la bande transporteuse (20) présente au moins un premier assemblage électronique, dans lequel le premier assemblage électronique présente au moins une première mémoire de données et une première antenne (120) permettant une communication sans contact, dans lequel le système à bande transporteuse (10) présente au moins un premier dispositif de communication de lecture (40) permettant une lecture sans contact de données à partir de la première mémoire de données du premier assemblage électronique, dans lequel le système à bande transporteuse (10) présente au moins un premier dispositif de communication d'écriture (50), dans lequel le système à bande transporteuse (10) présente au moins un premier capteur (130), dans lequel le premier capteur (130) est conçu pour détecter des premières données d'au moins une variable d'état du système à bande transporteuse (10), dans lequel les premières données sont transmises pendant la communication entre le premier dispositif de communication d'écriture (50) et le premier assemblage électronique du premier capteur (130) dans la première mémoire de données, dans lequel le système à bande transporteuse (10) présente au moins un second dispositif de communication de lecture (40), **caractérisé en ce que** le système à bande transporteuse (10) présente au moins un second mécanisme d'entraînement, dans lequel le premier dispositif de communication de lecture (40) est relié au premier mécanisme d'entraînement, dans lequel le second dispositif de communication de lecture (40) est relié au second mécanisme d'entraînement, dans lequel le système à bande transporteuse (10) présente une pluralité de mécanismes d'entraînement, dans lequel respectivement entre deux mécanismes d'entraînement adjacents est disposé, respectivement, au moins un dispositif de communication d'écriture, dans lequel un dispositif de communication de lecture (40) est disposé de manière adjacente à chaque mécanisme d'entraînement.

2. Système à bande transporteuse (10) selon la revendication 1, **caractérisé en ce que** le premier capteur (130) est un composant du premier assemblage électronique et le premier dispositif de communication d'écriture (50) est conçu pour l'approvisionnement en énergie sans contact du premier assemblage électronique.

3. Système à bande transporteuse (1) selon l'une quelconque des revendications précédentes, **caractérisé en ce que** le premier capteur (130) est conçu pour détecter la tension dans la bande transporteuse (20).

4. Système à bande transporteuse (10) selon l'une quelconque des revendications précédentes, **caractérisé en ce que** le premier dispositif de communication de lecture (40) est relié par le biais d'un premier dispositif de commande (160) au premier mécanisme d'entraînement, dans lequel le second dispositif de communication de lecture (40) est relié par le biais d'un second dispositif de commande (160) au second mécanisme d'entraînement.

5. Système à bande transporteuse (10) selon l'une quelconque des revendications précédentes, **caractérisé en ce que** le premier assemblage électronique présente un circuit intégré (110), dans lequel le circuit intégré (110) présente une épaisseur inférieure à 50 pm, de préférence inférieure à 30 pm, le plus préférentiellement inférieure à 20 pm.

6. Système à bande transporteuse (10) selon l'une quelconque des revendications précédentes, **caractérisé en ce que** le premier assemblage électronique présente un circuit intégré (110), dans lequel le circuit intégré (110) présente une antenne (120) permettant une communication sans contact.

7. Système à bande transporteuse (10) selon l'une quelconque des revendications précédentes, **caractérisé en ce que** le premier assemblage électronique est disposé à l'intérieur de la bande transporteuse (20).

8. Système à bande transporteuse (10) selon l'une quelconque des revendications précédentes, **caractérisé en ce que** la bande transporteuse (20) présente au moins un premier segment et un second segment, dans lequel le premier segment et le second segment sont disposés l'un derrière l'autre, dans lequel le premier assemblage électronique est disposé dans la zone de liaison du premier segment et du second segment.

9. Système à bande transporteuse (10) selon l'une quelconque des revendications précédentes, **caractérisé en ce que** le premier assemblage électronique est disposé sous la forme d'un film à puce (100) sur la partie inférieure de la bande transporteuse (20).

10. Système à bande transporteuse (10) selon l'une quelconque des revendications précédentes, **caractérisé en ce que** le système de bande transporteuse (10) présente au moins un premier rouleau (150), dans lequel le premier rouleau (150) est entraîné par la bande transporteuse (20), dans lequel le premier rouleau (150) est relié à un premier générateur (140), dans lequel le premier générateur (140) est relié électriquement au premier dispositif de communication d'écriture (50), dans lequel le premier générateur (140) alimente le premier dispositif de communication d'écriture (50) en énergie électrique.

11. Système à bande transporteuse (10) selon l'une quelconque des revendications précédentes, **caractérisé en ce que** le système à bande transporteuse (10) présente au moins un premier rouleau (150), dans lequel le premier capteur (130) ou un second capteur (130) est disposé dans ou sur le premier rouleau (150), dans lequel le premier capteur (130) ou le second capteur (130) est conçu pour surveiller l'état du premier rouleau (150), dans lequel le premier capteur (130) ou le second capteur (130) est relié au premier dispositif de communication d'écriture (50).

12. Système à bande transporteuse (10) selon la revendication 11, **caractérisé en ce que** le premier capteur (130) ou le second capteur (130) est relié par le biais d'une première unité d'évaluation du capteur au premier dispositif de communication d'écriture (50), dans lequel l'unité d'évaluation du capteur est conçu pour ne pas transmettre de données dans la première mémoire de données, aussi longtemps que le premier rouleau (150) est pleinement fonctionnel, dans lequel l'unité d'évaluation du capteur est conçue pour inclure une information dans la première mémoire de données, dès que l'état du premier rouleau (150) ne correspond pas à l'état normal.

13. Système à bande transporteuse (10) selon l'une quelconque des revendications précédentes, **caractérisé en ce que** la bande transporteuse (20) présente au moins un second assemblage électronique.

14. Procédé de fonctionnement d'un système à bande transporteuse (10) selon l'une quelconque des revendications précédentes, dans lequel un système à bande transporteuse (10) est choisi, lequel présente au moins un second mécanisme d'entraînement et un second dispositif de communication de lecture (40), dans lequel le premier dispositif de communication de lecture (40) est relié au premier mécanisme d'entraînement, dans lequel le second dispositif de communication de lecture (40) est relié au second mécanisme d'entraînement, dans lequel le premier capteur (130) détecte la tension dans la bande transporteuse (20), dans lequel le procédé présente les étapes suivantes :
a) Mesure de la tension de la bande transporteuse (20) au moyen du premier capteur (130),
b) Enregistrement des premières données sur le premier support de données, dans lequel les premières données sont corrélées aux tensions mesurées de la bande transporteuse (20),
c) Transport ultérieur de la bande transporteuse (20),
d) Lecture des premières données au moyen du premier dispositif de communication de lecture (40),
e) Évaluation des tensions de la bande transporteuse (20),
f) Réglage de la commande du premier mécanisme d'entraînement,
**caractérisé en ce qu'**un système à bande transporteuse (10) est choisi avec une pluralité de mécanismes d'entraînement, dans lequel les tensions de la bande transporteuse (20) sont mesurées, respectivement, entre deux mécanismes d'entraînement, dans lequel la tension ou l'une des informations pouvant être corrélée dans la zone du mécanisme d'entraînement, lequel suit la tension à l'endroit de détection, est lue à partir de la première mémoire de données, dans lequel la commande du mécanisme d'entraînement est réglée en fonction des tensions.
